Europäisches Patentamt

(19) European Patent Office

Office européen des brevets

(11) Numéro de publication: **0 032 085**
**B1**

(12) **FASCICULE DE BREVET EUROPEEN**

(45) Date de publication du fascicule du brevet: **23.11.83**

(51) Int. Cl.³: **H 02 H 9/06, H 01 T 1/00**

(21) Numéro de dépôt: **80401807.5**

(22) Date de dépôt: **16.12.80**

(54) Dispositif de protection multipolaire contre les surtensions.

(30) Priorité: **28.12.79 FR 7932041**

(43) Date de publication de la demande:
**15.07.81 Bulletin 81/28**

(45) Mention de la délivrance du brevet:
**23.11.83 Bulletin 83/47**

(84) Etats contractants désignés:
**AT BE CH DE GB IT LI NL SE**

(56) Documents cités:
**DE - A - 2 003 606**
**FR - A - 2 305 047**
**FR - A - 2 384 371**
**GB - A - 1 436 625**
**US - A - 4 023 071**

**PATENTS ABSTRACTS OF JAPAN, vol. 2, no.
79, 23 juin 1978, page 3262E78**

(73) Titulaire: **Compagnie Industrielle de Tubes et
Lampes Electrigues CITEL
8, avenue Jean Jaurès
F-92130 Issy les Moulineaux (FR)**

(72) Inventeur: **Cholley, Jacques
17 bis, boulevard Victor
F-75015 Paris (FR)**

(74) Mandataire: **Peuscet, Jacques
3, Square de Maubeuge
F-75009 Paris (FR)**

Courier Press, Leamington Spa, England.

Dispositif de protection multipolaire contre les surtensions

La présente invention concerne un dispositif de protection multipolaire contre les surtensions, comportant une pluralité de contacts extérieurs reliés à des circuits à protéger.

Des dispositifs du type visé ci-dessus utilisés pour la protection de différents circuits ou réseaux, notamment dans le domaine des télécommunications, peuvent comporter des varistances, c'est-à-dire, des éléments semiconducteurs dont la résistance varie avec la tension appliquée à leurs bornes. Ils peuvent également comporter des parafoudres à gaz qui sont généralement constitués de deux électrodes écartées l'une de l'autre d'une distance déterminée, reliées chacune à un contact électrique extérieur et disposées à l'intérieur d'une enveloppe étanche permettant de maintenir, à l'intérieur de ladite enveloppe, une pression réduite. Lorsqu'apparaît entre les électrodes du parafoudre, une tension égale ou supérieure à une valeur dite tension d'amorçage, il s'établit un arc qui ionise le gaz sous pression réduite contenu dans le parafoudre et permet donc le passage du courant même si ensuite la tension décroît du fait que le passage du courant se trouve facilité à partir du moment où le gaz est ionisé. Par contre, lorsqu'aucun arc n'a été établi, une tension inférieure à la tension d'amorçage est incapable de provoquer le passage du courant dans le parafoudre qui joue alors de rôle d'un isolant.

Les parafoudres peuvent également être réalisés sous forme multipolaire. Dans ce cas, ils présentent, en face d'une première électrode reliée par exemple à la masse ou à la terre, une pluralité de secondes électrodes éloignées de la première et écartées entre elles d'une façon telle que les positions respectives de la première électrode et d'une seconde électrode soient identiques entre elles pour toutes les secondes électrodes; chacune des secondes électrodes étant reliée à un circuit différent à protéger, il suffit que la tension d'amorçage apparaisse entre la première électrode et l'une des secondes électrodes pour que l'arc s'établisse et que l'ionisation se fasse. A partir de ce moment, des surtensions même inférieures à la tension d'amorçage, qui apparaitraient sur les autres circuits, peuvent s'écouler vers l'électrode unique mise à la terre et la totalité des réseaux se trouve simultanément protégée.

La fabrication de ces parafoudres multipolaires présente cependant de grandes difficultés. La tension d'amorçage dépend, en effet, étroitement des caractéristiques géométriques ainsi que de l'état de surface de l'ensemble formé par les électrodes et l'enveloppe. Du fait que des normes rigoureuses sont prescrites dans ce domaine, la réalisation de parafoudres bipolaires est déjà une opération délicate; a fortiori, il est très difficile de réaliser des parafoudres multipolaires avec une précision suffisante pour garantir l'obtention d'une même tension d'amorçage entre la première électrode et l'une quelconque des secondes électrodes. Il en résulte qu'un grand nombre de parafoudres multipolaires sont mis au rebut malgré le grand soin apporté à leur fabrication car la tension d'amorçage pour au moins un des couples formés par la première électrode et une seconde électrode ne correspond pas à la valeur prescrite par la norme.

On a déjà proposé, pour améliorer l'homogénéïté des tensions d'amorçage relatives aux différentes secondes électrodes d'un parafoudre multipolaire, de placer dans l'enveloppe du parafoudre un produit radioactif favorisant l'ionisation du gaz du parafoudre. Ce procédé ne donne que partiellement satisfaction et, en outre, certaines législations interdisent l'utilisation de produits radioactifs.

On a, en outre, proposé, dans le brevet britannique GB—A—1 436 625 d'utiliser deux parafoudres bipolaires ayant une borne commune reliée à la terre, les deux autres bornes étant reliées chacune à des contacts extérieures connectés aux circuits à protéger; chaque contact extérieur est donc relié à deux liaisons connectées chacune à une borne d'un élément limiteur de tension à deux bornes; l'une des liaisons associée à chaque contact extérieur porte au moins une diode et laisse passer le courant dans le sens borne-contact; l'autre liaison porte aussi au moins une diode et laisse passer le courant dans le sens contact-borne. Ce dispositif oblige à utiliser deux éléments limiteurs de tension distincts: d'une part, ces éléments ne peuvent avoir des caractéristiques strictement identiques comme il serait souhaitable et, d'autre part, le prix de revient de l'ensemble est grevé par la présence de deux parafoudres.

La présente invention vise à proposer un dispositif de protection multipolaire pourvu d'un élément limiteur de surtension unique consistant soit en un parafoudre bipolaire, soit en une varistance, soit encore en un parafoudre bipolaire et une varistance montés en parallèle, le dispositif de protection susmentionné, qui est beaucoup plus simple à réaliser qu'un parafoudre multipolaire, permettant de mettre à la même tension l'ensemble des contacts extérieurs, dès lors qu'il se présente une surtension sur l'un desdits contacts extérieurs.

La présente invention a, en conséquence, pour objet, un dispositif de protection multipolaire contre les surtensions comportant une pluralité de premiers contacts extérieurs pour les circuits à protéger et permettant de mettre à la même tension l'ensemble desdits contacts extérieurs dès qu'une surtension se présente sur l'un d'entre eux, chaque premier contact extérieur étant relié à deux liaisons connectées chacune à une borne d'un élément limiteur de tension à deux bornes, l'une des liaisons associées à chaque premier contact extérieur portant au moins une diode et laissant passer le courant dans le sens borne-contact, alors que l'autre liaison porte au moins une diode et laisse passer le courant dans le sens contact-borne, caractérisé par le fait que l'ensemble des contacts extérieurs comprenant les premiers contacts extérieurs et un second contact extérieur connecté à un potentiel de référence, ensemble relié à un seul élément limiteur de surtension à deux bornes, l'une de ces deux bornes étant reliée à chaque contact extérieur par une liaison comportant au moins une diode passante dans le sens contact-borne, alors que l'autre de ces deux bornes est reliée à chaque contact extérieur par une liaison comportant au moins une diode passante dans le sens borne-contact.

Ainsi, grâce à l'invention, si une surtension apparaît sur l'un des contacts extérieurs du dispositif de protection multipolaire, cette surtension ne peut pas s'écouler directement sur les autres contacts du dispositif de protection multipolaire, en raison de la présence des diodes et elle ne peut aller vers lesdits autres contacts qu'en passant par l'élément limiteur de surtension. Ainsi, dans le cas où l'élément limiteur de surtension consiste en un parafoudre bipolaire, la tension d'amorçage correspondant au passage de la surtension d'un contact sur l'ensemble des autres contacts est donc toujours la même et correspond uniquement à la tension d'amorçage du parafoudre bipolaire du dispositif.

L'élément limiteur de surtension utilisé peut être constitué, ainsi qu'on l'a vu, par un parafoudre à gaz bipolaire du type classique. Ce dernier peut avantageusement comporter une enveloppe extérieure métallique constituant l'une des bornes ou électrodes, la deuxième borne ou électrode étant coaxiale à ladite enveloppe. En variante, l'élément limiteur de surtension peut consister en une varistance de type connu par exemple celle qui est commercialisée sous la désignation "VZD 250" par la société "LCC". Selon une autre variante, l'élément limiteur de surtension est composé d'un parafoudre bipolaire et d'une varistance montés en parallèle. On doit considérer comme entrant dans le cadre de l'invention le fait d'utiliser un limiteur de surtension consistant en des composants électroniques dont la fonction serait équivalente à celle d'une varistance, par exemple des doubles diodes Zener disposées tête-bêche ou des doubles diodes ou des composants dénommés "Transorb", ces éléments étant tous des éléments limiteurs de surtension mais travaillant dans des domaines différents, leur temps de réponse étant plus ou moins rapide. On peut envisager d'utiliser simultanément une pluralité de limiteurs de surtension montés en parallèle.

Dans un mode d'utilisation avantageux, l'un des contacts extérieurs dit "premier contact" du dispositif de protection multipolaire est relié à la terre; les autres contacts extérieurs, dits "seconds contacts" du dispositif sont reliés chacun à un circuit à protéger; si une surtension se présente sur l'un quelconque des seconds contacts, et si cette surtension est supérieure à la tension d'amorçage du parafoudre bipolaire qui constitue, par exemple, l'élément limiteur de surtension, la surtension traverse ledit parafoudre bipolaire et s'écoule à la terre par le premier contact, tous les circuits étant ainsi amenés par l'amorçage du parafoudre bipolaire au potentiel O. Il est à noter que dans ce cas, la tension d'amorçage du dispositif de protection multipolaire est toujours la même, quel que soit le second contact sur lequel apparaît la surtension.

Il est clair que s'il est particulièrement intéressant de mettre à la terre l'ensemble des seconds contacts du dispositif de protection multipolaire selon l'invention, il peut, dans certains cas, être également intéressant lorsqu'un des contacts extérieurs du dispositif de protection ne peut être relié à la terre, de rendre équipotentiels tous les circuits reliés aux contacts du dispositif, même si ce potentiel n'est pas le potentiel O.

Le dispositif selon l'invention fonctionne quelle que soit la polarité de la surtension qui apparaît sur l'un des contacts extéieurs, étant donné que, pour une première polarité, la surtension passe vers l'une des bornes de l'élément limiteur de surtension alors que, pour l'autre polarité, la surtension passe sur l'autre borne de l'élément limiteur de surtension.

Le circuit formé par les deux pluralités de diodes montées en parallèle peut être réalisé à l'aide de composants discrets. Mais il peut aussi être réalisé sous forme intégrée, par exemple sous forme de deux plaquettes d'un semiconducteur tel que du silicium, une première plaquette étant reliée, d'une part, à l'une des bornes de l'élément limiteur de surtension et, d'autre part, à chacun des contacts extérieurs du dispositif de protection multipolaire, alors que la deuxième plaquette est reliée, d'une part, à l'autre borne de l'élément limiteur de surtension et, d'autre part, à chacun des contacts extérieurs du dispositif.

Grâce à l'invention, on a ainsi réalisé un dispositif de protection multipolaire présentant strictement, pour tous les jeux de deux pôles, la même courbe de variation de la tension en fonction de l'intensité, c'est-à-dire, celle de l'élément limiteur de surtension particulier utilisé, et ceci, en évitant toutes les difficultés inhérentes à la construction des parafoudres multipolaires de type classique.

Pour mieux faire comprendre l'objet de la présente invention, on va en décrire ci-après à titre d'exemples purement illustratifs et non limitatifs, deux modes de réalisation représentés sur le dessin annexé.

Sur ce dessin:

la figure 1 représente le schéma d'un dispositif selon l'invention réalisé sous forme discrète;

la figure 2 représente le schéma d'un dispositif selon l'invention réalisé à l'aide d'éléments intégrés.

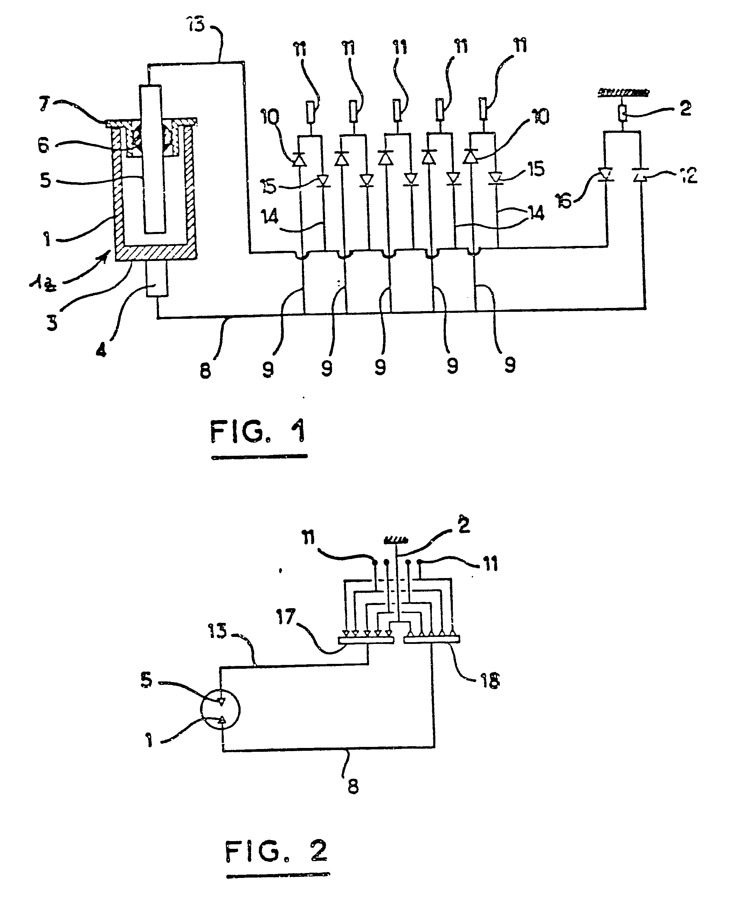

En se référant à la figure 1, on voit que le dispositif de protection multipolaire contre les surtensions comporte, à titre d'élément limiteur de surtension, un parafoudre bipolaire 1a présentant une enveloppe métallique cylindrique 1 qui constitue l'une des deux électrodes dudit parafoudre et est susceptible d'être mise à la terre, par exemple à l'aide du premier contact 2. Cette enveloppe cylindrique comporte, de façon connue, une base 3 sur laquelle se raccorde un prolongement cylindrique 4. Sur la face intérieure de la base 3 peut être ménagé un petit logement à l'intérieur duquel peut être comprimée une poudre à base de baryum (non représentée). Le parafoudre bipolaire 1a comporte une autre électrode constituée par une tige 5 sensiblement cylindrique disposée selon l'axe de l'espace intérieur délimité par l'enveloppe 1. La tige 5 est réalisée en un alliage fer-nickel-cobalt et elle est soudée au moyen d'une perle de verre 6 dans la zone centrale d'une bague cylindrique 7 réalisée en un alliage fer-nickel-cobalt soudable au verre. La bague 7 est soudée sur l'enveloppe 1 après que l'on a effectué un vide suffisant à l'intérieur du parafoudre. A titre d'exemple, ce parafoudre peut présenter une tension d'amorçage égale à 280 V.

Le premier contact 2 est relié à la première électrode 1 par un conducteur 8 à partir duquel s'étendent un certain nombre de dérivations parallèles 9 reliées au pôle P de diodes correspondantes 10. Le pôle N de ces diodes 10 est relié chaque fois à un second contact 11. D'autre part, le contact 2 est lui-même séparé de l'électrode 1 par une diode 12 disposée dans le même sens que les diodes 10.

De même, à partir de l'autre électrode 5 du parafoudre, un conducteur 13 est relié à une pluralité de dérivations 14 en nombre égal aux dérivations 9, s'étendant également en parallèle et aboutissant aux pôles N d'une pluralité de diodes 15 montées en sens inverse par rapport aux diodes 10 et reliées également respectivement au contact 11. En outre, l'électrode 5 est reliée au contact de terre 2 par une diode 16 montée dans le même sens que les diodes 15.

Le fonctionnement est le suivant: tant que, dans les différents circuits auxquels sont reliés les contacts 11, les tensions restent inférieures à la tension d'amorçage du parafoudre 1a, le dispositif de protection multipolaire ne conduit pas et aucun des circuits n'est relié à la terre par l'intermédiaire du premier contact 2. Si, par contre, une surtension, par exemple positive, ayant une valeur supérieure à la valeur de la tension d'amorçage du parafoudre bipolaire 1a, apparait sur l'un des contacts 11, la diode 15 qui est conductrice permet le passage de cette surtension sur le conducteur 13 par l'intermédiaire de la dérivation 14. Cette surtension ne peut cependant pas se propager par les autres diodes 15 qui ne sont pas conductrices dans le sens retour. Elle ne peut pas non plus aboutir au contact 2 à cause de la diode 16. La surtension, qui s'établit ainsi entre l'électrode 5 et l'électrode constituée par l'enveloppe 1, provoque l'éclatement d'un arc dans le parafoudre bipolaire 1a, qui devient conducteur et joue son rôle de protection, la mise à la terre s'effectuant par le conducteur 8 et la diode 12 conductrice. A partir de ce moment, si par hasard des surtensions positives apparaissent sur les autres contacts 11, ces surtensions sont conduites par les diodes 15, les dérivations 14 correspondantes et la conducteur 13 vers le parafoudre bipolaire déjà conducteur et la totalité des circuits se trouve ainsi protégée.

Si, au contraire, la surtension supérieure à la valeur de la tension d'amorçage, qui apparait brusquement sur l'un des contacts 11, est négative, elle pourra passer par la diode 10 correspondante et par la dérivation 9 vers le conducteur 8 et de là, vers l'électrode 1 par la diode 12, le chemin vers le contact 2 étant bloqué, ce qui provoque l'éclatement de l'arc et la protection du circuit concerné et, simultanément, si nécessaire, des autres circuits.

Il est clair que pour assurer la protection des circuits branchés sur les contacts 11, on peut utiliser un dispositif de protection équipé non pas d'un parafoudre bipolaire 1a mais d'une varistance ou encore d'une varistance et d'un parafoudre bipolaire montés en parallèle.

En se référant maintenant à la figure 2, on voit que, dans ce mode de réalisation, l'élément limiteur de surtension est toujours constitué par un parafoudre bipolaire mais que chaque ensemble de diodes associé à l'une des électrodes 1,5 du parafoudre bipolaire est réalisé de façon intégrée. On a représenté de façon schématique, les électrodes 1 et 5 reliées aux conducteurs 8 et 13. Le conducteur 8 est relié à la face N d'une plaquette de silicium 18 traitée de façon à former une pluralité de diodes aboutissant aux différents contacts 11 et au contact de terre. Le conducteur 13 aboutit à la face P d'une plaquette de silicium 17 également traitée de façon à présenter une pluralité de diodes reliées aux différents contacts 11 et au contact de terre 2 d'une façon telle que chaque contact 11, ainsi que le contact 2, soit relié tant à une diode de la plaquette 18 qu'à une diode de la plaquette 17. Pour le reste, le fonctionnement est le même que dans le cas de la figure 1.

Des essais ont permis de constater que le dispositif selon l'invention présente, dans le cas où il est équipé d'un parafoudre bipolaire, un temps de réponse inférieur à une micro-seconde pour un front d'onde de 1 Kv par micro-seconde, temps de réponse qui n'est guère plus élevé que celui des parafoudres connus. Par ailleurs, la tension inverse des diodes n'a pas besoin d'être importante, puisque dans tous les cas le dispositif doit fonctionner lorsque la tension d'amorçage, relativement basse, est franchie. Tout au plus le dispositif selon l'invention présente, par rapport aux parafoudres multipolaires déjà connus, une capacité parasite supplémentaire de faible valeur due aux diodes. Cette capacité parasite qui est de l'ordre de quelques dizaines de picofarads est le plus souvent sans importance sauf dans le cas de transmission haute fréquence.

Il est bien entendu que les modes de réalisation ci-dessus décrits ne sont aucunement limitatifs et pourront donner lieu à toutes modifications désirables sans sortir pour cela du cadre de l'invention.

## Revendications

1. Dispositif de protection multipolaire contre les surtensions comportant une pluralité de premiers contacts extérieurs (11) pour les circuits à protéger et permettant de mettre à la même tension l'ensemble desdits contacts extérieurs (11) dès qu'une surtension se présente sur l'un d'entre eux, chaque premier contact extérieur (11) étant relié à deux liaisons (9, 14) connectées chacune à une borne d'un élément limiteur de tension à deux bornes (1, 5), l'une des liaisons (9, 14) associées à chaque premier extérieur (11) portant au moins une diode (10, 15) et laissant passer le courant dans le sens borne-contact alors que l'autre liaison porte au moins une diode (10, 15) et laisse passer le courant dans le sens contact-borne, caractérisé par le fait que l'ensemble des contacts extérieurs comprenant les premiers contacts extérieurs (11) et un second contact extérieur (2) connecté à un potentiel de référence, ensemble relié à un seul élément limiteur de surtension (1a) à deux bornes (1, 5), l'une (1) de ces deux bornes étant reliée à chaque contact extérieur (2, 11) par une liaison (13, 14) comportant au moins une diode (15, 16) passante dans le sens contact-borne, alors que l'autre (5) de ces deux bornes est reliée á chaque contact extérieur (2, 11) par une liaison (8, 9) comportant au moins une diode (10, 12) passante dans le sens borne-contact.

2. Dispositif selon la revendication 1, caractérisé par le fait que l'élément limiteur de surtension (1a) est constitué par un parafoudre bipolaire.

3. Parafoudre selon la revendication 2, caractérisé par le fait que le parafoudre bipolaire comporte une enveloppe métallique (1) formant la première électrode et une électrode cylindrique centrale formant la seconde électrode (5), des moyens (6, 7) maintenant de façon étanche ladite seconde électrode (5) à l'intérieur de l'enveloppe (1).

4. Dispositif selon la revendication 1, caractérisé par le fait que l'élément limiteur de surtension (1a) est constitué par au moins un composant électronique pris dans le groupe formé par une varistance, une double diode Zener, une double diode.

5. Dispositif selon les revendications 1 et 4 prises simultanément, caractérisé par le fait que l'élément limiteur de surtension (1a) est constitué par un parafoudre bipolaire monté en parallèle avec au moins un composant électronique pris dans le groupe formé par une varistance, une double diode Zener, une double diode.

6. Parafoudre selon l'une des revendications 1 à 5, caractérisé par le fait que le second contact extérieur (2) est destiné à être relié à la terre.

7. Parafoudre selon l'une des revendications 1 à 6, caractérisé par le fait que lesdites diodes (10, 12, 15, 16) sont constituées de composants discrets.

8. Parafoudre selon l'une des revendications 1 à 6, caractérisé par le fait que chaque ensemble de diodes (10, 12) et (15, 16) associé à l'une des deux bornes de l'élément limiteur de surtension (1a) est réalisé de façon intégrée sur une même plaquette semi-conductrice.

## Patentansprüche

1. Mehrpolige Überspannungsschutzvorrichtung, welche mehrere erste externe Kontakte (11) für die zu schützenden Schaltungen aufweist und es ermöglicht, die Gesamtheit der externen Kontakte (11) bei Auftreten einer Überspannung an einem von ihnen an die gleiche Spannung zu legen, wobei jeder erste externe Kontakt (11) mit zwei Anschlüssen (9, 14) verbunden ist, von denen jeder mit einem Pol eines zweipoligen (1, 5) Spannungsbegrenzungselementes verbunden ist und wobei der eine der Anschlüsse (9, 14) eines jeden ersten externen Kontaktes (11) mindestens eine Diode (10, 15) aufweist und den Strom in Richtung Pol-Kontakt durchläßt, während der andere Anschluß mindestens eine Diode (10, 15) aufweist und den Strom in Richtung Kontakt-Pol durchläßt, dadurch gekennzeichnet, daß die Gesamtheit der externen Kontakte, die die ersten externen Kontakte (11) und einen mit einem Referenzpotential verbundenen zweiten externen Kontakt (2) umfaßt, gemeinsam mit einem einzigen zweipoligen (1, 5) Überspannungsbegrenzungselement (1a) verbunden ist, daß einer der beiden Pole durch eine Verbindung (13, 14), die mindestens eine in Richtung Kontakt-Pol durchlässige Diode (15, 16) enthält, mit jedem externen Kontakt (2, 11) verbunden ist, während der andere (5) der beiden Pole über eine Verbindung (8, 9), die mindestens eine in Richtung Pol-Kontakt durchlässige Diode (10, 12) enthält, mit jedem externen Kontakt (2, 11) verbunden ist.

2. Vorrichtung nach Anspruch 1, dadurch gekennzeichnet, daß das Überspannungsbegrenzungselement (1a) aus einer zweipoligen Entladungsvorrichtung besteht.

3. Entladungsvorrichtung nach Anspruch 2, dadurch gekennzeichnet, daß die zweipolige Entladungsvorrichtung eine metallische Umhüllung (1), die die erste Elektrode bildet, und eine zentrale zylindrische Elektrode, die die zweite Elektrode (5) bildet, sowie Mittel (6, 7) aufweist, die die zweite Elektrode (5) im Innern der Umhüllung (1) unter Abdichtung halten.

4. Vorrichtung nach Anspruch 1, dadurch gekennzeichnet, daß das Überspannungsbegrenzungselement (1a) aus mindestens einem elektronischen Bauteil besteht, das der aus einer Varistanz, einer Doppel-Zenerdiode und einer Doppel-Diode bestehenden Gruppe entnommen ist.

5. Vorrichtung nach den Ansprüchen 1 und 4 gemeinsam, dadurch gekennzeichnet, daß das Überspannungsbegrenzungselement (1a) aus einer zweipoligen Entladungsvorrichtung besteht, die mit mindestens einem elektronischen Bauteil parallelgeschaltet ist, daß der aus einer Varistanz, einer Doppel-Zenerdiode und einer Doppeldiode gebildeten Gruppe entnommen ist.

6. Entladungsvorrichtung nach einem der Ansprüche 1 bis 5, dadurch gekennzeichnet, daß der zweite externe Kontakt (2) dazu bestimmt ist, mit Erde verbunden zu werden.

7. Entladungsvorrichtung nach einem der Ansprüche 1 bis 6, dadurch gekennzeichnet, daß die Dioden (10, 12, 15, 16) aus diskreten Bauteilen bestehen.

8. Entladungsvorrichtung nach einem der Ansprüche 1 bis 6, dadurch gekennzeichnet, daß jede der Gruppen von Dioden (10, 12 und 15, 16), die einem der Pole des Überspannungsbegrenzungselementes (1a) zugeordnet sind, in integrierter Form auf demselben Halbleiterplättchen realisiert ist.

## Claims

1. A multipolar overvoltage protection device comprising a plurality of first external contacts (11) for the circuits to be protected and allowing the set of the said external contacts (11) to be subjected to the same voltage when an overvoltage occurs on one of them, each first external contact (11) being connected to two connectors (9, 14) each connected to one terminal of a voltage limiter element with two terminals (1, 5), one of the connectors (9, 14) connected to each first external contact (11) carrying at least one diode (10, 15) and allowing the current to pass in the terminal-contact direction, whilst the other connector carries at least one diode (10, 15) and allows the current to pass in the contact-terminal direction, characterised in that the set of external contacts (2) is connected to a reference potential, which set is connected to a single overvoltage limiter element (1a) with two terminals (1, 5), one (1) of these two terminals being connected to each external contact (2, 11) via a connector (13, 14) comprising at least one diode (15, 16) passing in the contact-terminal direction, whilst the other (5) of these two terminals is connected to each external contact (2, 11) via a connector (8, 9) comprising at least one diode (10, 12) passing in the terminal-contact direction.

2. A device according to Claim 1, characterised in that the overvoltage limiter element (1a) is constituted by a bipolar diverter.

3. A diverter according to Claim 2, characterised in that the bipolar diverter comprises a metal casing (1) forming the first electrode and a central cylindrical electrode forming the second electrode (5), means (6, 7) keeping the said second electrode (5) within casing (1) in a leakproof manner.

4. A device in accordance with Claim 1, characterised in that the overvoltage limiter element (1a) is constituted by at least one electronic component comprised in the group formed by a varistor, a double Zener diode, a double diode.

5. A device according to Claims 1 and 4 taken together, characterised in that the overvoltage limiter device (1a) is constituted by a bipolar diverter mounted in parallel with at least one electronic component comprised in the group formed by a varistor, a double Zener diode, a double diode.

6. A diverter according to one of Claims 1 to 5, characterised in that the second external contact (2) is intended to be connected to earth.

7. A diverter according to one of Claims 1 to 6, characterised in that the said diodes (10, 12, 15, 16) are constituted by discrete components.

8. A diverter according to one of Claims 1 to 6, characterised in that each set of diodes (10, 12) and (15, 16) connected to one of the two terminals of the overvoltage limiter device (1a) is made integrally on one and the same semiconductor strip.

0 032 085

FIG. 1

FIG. 2